# EUROPEAN PATENT SPECIFICATION

(11) **EP 1 896 156 B1**
(45) Date of publication and mention of the grant of the patent: **02.12.2009**
(21) Application number: 06767761.7
(22) Date of filing: 27.06.2006
(51) Int. Cl.: B01D 39/16

(54) **FILTER MATERIAL**
FILTERMATERIAL
MATIERE FILTRANTE

(30) Priority: 27.06.2005 JP 2005187348
(43) Date of publication of application: 12.03.2008
(73) Proprietor: Toyota Boshoku Kabushiki Kaisha, Kariya-shi, Aichi-ken 448-8651 (JP); AWA PAPER MFG. Co., Ltd., Tokushima-shi, Tokushima 770-0005 (JP)
(72) Inventor: KUME, Koji, Kariya-shi, Aichi 448-8651 (JP); SANAMI, Yoshihisa, Kariya-shi, Aichi 448-8651 (JP); KAGAWA, Joji, Tokushima-shi, Tokushima 770-0005 (JP); JYO, Takeo, Tokushima-shi, Tokushima 770-0005 (JP)
(74) Representative: Sherrard-Smith, Hugh
(86) International application number: PCT/JP2006/313183
(87) International publication number: WO 2007/001072

(56) References cited:
- US-A- 4 309 247
- US-A- 5 272 000
- US-A- 5 554 287
- US-A- 5 984 110
- US-B1- 6 224 768
- US-B1- 6 235 392
- US-B1- 6 360 478

## Description

### TECHNICAL FIELD

The present invention relates to a filter material used, for example, as an air filter for an engine.

### BACKGROUND ART

An air filter is typically required to have high performance in three aspects, that is, the filter material is required to have low pressure loss, a high dust holding amount, and high dust filtration efficiency. To enable a filter material to have low pressure loss, the filler material must have a high space ratio. An effective way to increase the space ratio is to use thick fibers and increase the bulkiness of the filter material. To enable a filter material to have a high dust holding amount, an effective way is to increase the bulkiness of the filter material to an appropriate level. A high dust holding amount prolongs the product life. To enable a filter material to have high dust filtration efficiency, an effective way is to use thin fibers and increase the ratio of fibers filled per unit volume or reduce the gaps between the fibers.

However, when the bulkiness of the filter material is increased to lower the pressure loss or increase the dust holding amount, the dust filtration efficiency is decreased. On the other hand, when the dust filtration efficiency is increased, air flows less easily through -the filter material thereby increasing the pressure loss of the filter material. In this case, the filter material may become clogged at an early stage and decrease the dust holding amount of the filter material. To enable the filter material to have high performance, the thickness etc. of fibers used in the filter material must be selected in a manner balancing the above three contradictory aspects of the filter material.

From a similar point of view, for example, Japanese Laid-Open Patent Publication Nos. 2004-237279 and 5-49825 propose conventional filter materials. The filter material described in Japanese Laid-Open Patent Publication No. 2004-237279 is formed by mixing lipophobic fibers with natural fibers at a predetermined ratio. This filter material is pleated so as to form ridges, valleys, and slopes, which are adjacent to the ridges and the valleys. The pleated structure enhances the movement of impregnated oil to the ridges and valleys and dries the slopes to improve the efficiency for capturing fine dust, such as carbon dust.

The filter member described in Japanese Laid-Open Patent Publication No. 5-49825 has a multilayer structure including two or more layers with pores of different diameters. An upstream layer has a maximum pore diameter of 30 to 150 µm and an average pore diameter of 20 to 60 µm. A downstream layer has a maximum pore diameter of 10 to 35 µm and an average pore diameter of 5 to 20 µm. The downstream layer is formed by crimped fibers, which have deformed cross-sections, and adhesive fibers. These layers are laminated and integrated using, for example, a wet paper manufacturing method. This structure enables the filter member to exhibit low pressure loss, a high dust holding amount, and high dust filtration efficiency.

### DISCLOSURE OF THE INVENTION

However, the conventional filter materials have shortcomings. More specifically, the structure described in Japanese Laid-Open Patent Publication No. 2004-237279 does not take into consideration the fiber diameters and mix ratios of the natural fibers and the lipophobic fibers. Thus, the filter material cannot exhibit the aspects of low pressure loss, high dust holding amount, and high dust filtration efficiency in a balanced manner.

The structure described in Japanese Laid-Open Patent Publication No. 5-49825 has a difficulty in -setting the pore diameters of the layers. Additionally, this structure requires a troublesome operation of laminating and integrating layers in the multilayer structure entirely having two or more layers. This complicates the manufacturing apparatus for the filter material. Further, the multilayer structure increases the thickness of the filter material. Such a think filter material may be problematic when being installed in a filter apparatus, such as a cleaner housing.

It is an object of the present invention to provide a filter material with a simple structure that is easy to manufacture and has high performance from the aspects of low pressure loss, a high dust holding amount, and high dust filtration efficiency.

To achieve the above object, a first aspect of the present invention provides a filter material fabricated by mixing first fibers of natural fibers having a fiber diameter of 10 to 40 µm, second fibers of crimped natural fibers having a fiber diameter of 10 to 40 µm, and third fibers of fibers having a fiber diameter of 5 to 10 µm. The first to third fibers are mixed at a mix ratio of 10 to 30% by mass, 40 to 80% by mass, and 10 to 30% by mass, respectively.

The first aspect of the present invention mixes three types of fibers to fabricate the filter material, which has a single-layer structure. Thus, the filter material has a simple structure and is easily fabricated. Further, the first fibers and the second members, which have large diameters, are used as the main material, and the second fibers are crimped. This increases the bulkiness of the filter material and realizes lower pressure loss and a high dust holding amount. Further, the third fibers, which have small diameters, are mixed at a mix ratio in the range of 10 to 30% by mass. This maintains the aspects of low pressure low and a high dust holding amount while realizing high dust filtration efficiency.

It is preferred that the first fibers and second fibers are each formed by at least either one of softwood pulp fibers and hardwood pulp fibers.

It is preferred that the third fibers are formed by synthetic fibers of a thermoplastic polymer.

It is preferred that the second fibers include 93 to 65 % by mass of softwood pulp fibers and 7 to 35 % by mass of hardwood pulp fibers.

It is preferred that the softwood pulp fibers have a fiber diameter of 30 to 40 µm, and the hardwood pulp fibers have a fiber diameter of 10 to 20 µm.

Other aspects and advantages of the present intention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a graph showing the relationship between the mix ratio of first fibers and the thickness of a filter material;
Fig. 2 is a graph showing the relationship between the mix ratio of first fibers and the pressure loss of a filter material;
Fig. 3 is a graph showing the relationship between the mix ratio of first fibers and the dust filtration efficiency of a filter material;
Fig. 4 is a graph showing the relationship between the mix ratio of first fibers and the dust holding amount of a filter material;
Fig. 5 is a graph showing the mix ratio of second fibers and the thickness of a filter material;
Fig. 6 is a graph showing the relationship between the mix ratio of second fibers and the pressure loss of a filter material;
Fig. 7 is a graph showing the mix ratio of second fibers and the dust filtration efficiency of a filter material;
Fig. 8 is a graph showing the relationship between the mix ratio of second fibers and the dust holding amount of a filter material;
Fig. 9 is a graph showing the relationship between the mix ratio of third fibers and the thickness of a filter material;
Fig. 10 is a graph showing the relationship between the mix ratio of third fibers and the pressure loss of a filter material;
Fig. 11 is a graph showing the relationship between the mix ratio of third fibers and the dust filtration efficiency of a filter material; and
Fig. 12 is a graph showing the relationship between the mix ratio of third fibers and the dust holding amount of a filter material.

### BEST MODE FOR CARRYING OUT THE INVENTION

A preferred embodiment of the present invention will now be described with reference to the drawings.

A filter material of the preferred embodiment has a single-layer and is fabricated by mixing first fibers, second fibers, and third fibers. The first fibers are natural fibers having large fiber diameters. The second fibers are crimped fibers obtained by crimping natural fibers having the same diameters as the natural fibers, which are used as the first fibers. The third fibers are synthetic resin fibers that are made of thermoplastic polymers having small fiber diameters. The first fibers are formed by softwood pulp fibers. The second fibers are obtained by mercerizing softwood pulp fibers and hardwood pulp fibers by chemically treating the fibers with an alkaline aqueous solution. The mercerization causes the fibers to be twisted or crimped so that the second fibers appear to have large fiber diameters.

The softwood pulp fibers used as the first fibers have fiber diameters in the range of 10 to 44 µm. In the preferred embodiment, the value of the fiber diameter is expressed in accordance with the normal distribution of the fibers. The same applies to the values of the fiber diameters given hereafter in this specification. When the cross-section of a fiber is not circular, the maximum with of the fiber is used as its fiber diameter. The mix ratio of the first fibers in the entire filter material is set in the range of 10 to 30% by mass. If the fiber diameter of the first fibers were set to be smaller than 10 µm without changing the mix ratio of the first fibers, the total fiber length of the first fibers would increase. This would finely divide the space in the filter material into narrow gaps between the fibers. As a result, the filter material would become easily clogged and fail to exhibit low pressure loss and a high dust holding amount. On the other hand, if the fiber diameter of the first fibers were set to be larger than 40 µm, the total fiber length of the first fibers would decrease. This would form gaps that are too large between the fibers in the filter material. As a result, the filter material would not have high dust filtration efficiency.

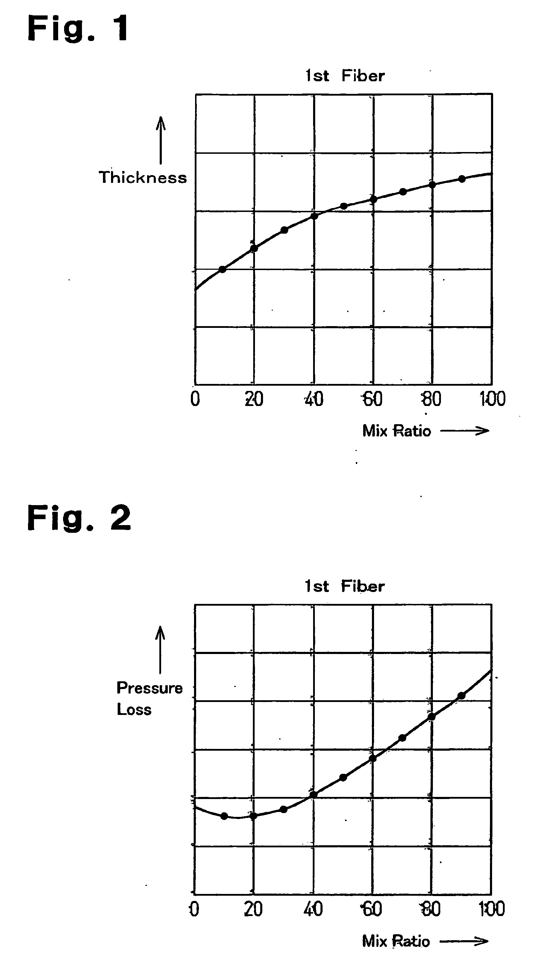

The mix ratio of the first fibers in the entire filter material was changed while keeping the mix ratios of the second and third fibers fixed. In this case, changes in the thickness, the pressure loss, the dust filtration efficiency, and the dust holding amount of the filter material were observed. Figs. 1 to 4 show the results. The thickness of the filter material indicates the bulkiness of the filter material. As shown in Fig. 1, the thickness of the filter material tends to increase as the mix ratio of the first fibers increases. However, the increase rate of the thickness decreases as the mix ratio of the first fibers exceeds approximately 30% by mass. This indicates that the bulkiness of the filter material decreases due to the weight of the first fibers when the mix ratio of the first fibers exceeds approximately 30% by mass. Thus, the increase rate of space in the filter material decreases. Further, as shown in Fig. 2, the pressure loss tends to increases as the mix ratio of the first fibers increases. This is because the resistance to air flowing through the filter material increases as the mix ratio of the first fibers increases. In particular, the pressure loss has a tendency of drastically increasing when the mix ratio of the first fibers exceeds approximately 30% by mass.

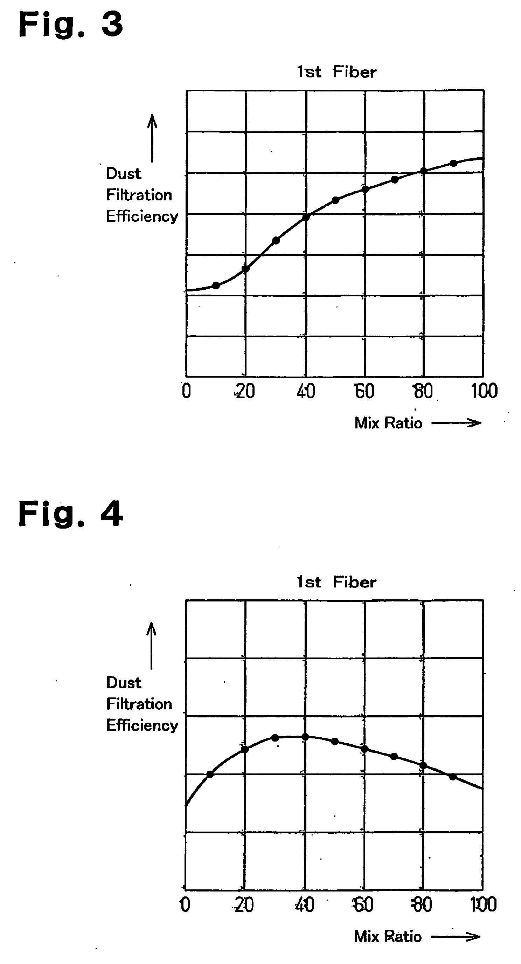

Further, as shown in Fig. 3, the dust filtration efficiency increases to a certain extent as the mix ratio of the first fibers increases. However, when the mix ratio of the first fibers exceeds approximately 30% by mass, the increase rate in dust capturing efficiently decreases since the mix ratio of the third fibers relatively decreases. More specifically, the dust filtration efficiency decreases when the mix ratio of the third fibers decreases because the third fibers have small fiber diameters.

As shown in Fig. 4, the -dust holding amount, which indicates the product life, increases up until the mix ratio of the first fibers reaches approximately 30% by mass but starts decreasing as the mix ratio of the first fibers exceeds approximately 30% by mass. This is because the increase of the dust filtration efficiency shown in Fig. 3 results in easy clogging of the filter material and decreases the dust holding amount. As a result, the product life of the filter material would be shortened when the mix ratio of the first fibers exceeds approximately 30% by mass.

When the mix ratio of the first fibers is set to be less than 10% by mass, the mix ratio of the third fibers having small fiber diameters relatively increases. This is not desirable from the aspects of pressure loss and dust filtration efficiency.

These results indicate that it is preferable to set the mix ratio of the first fibers in a range of 10 to 30% by mass.

The softwood pulp fibers used as the second fibers have fiber diameters in the range of 30 to 40 µm. The hardwood pulp fibers used as the second fibers have fiber diameters in the range of 10 to 20 µm. Accordingly, the second fibers have a fiber diameter in the range of 10 to 40 µm. The second fibers, which are crimped, form large gaps therebetween. As a result, the second fibers contribute to increasing the bulkiness of the filter material. The mix ratio of the second fibers is in the range of 40 to 80% by mass. The second fibers are formed by 93 to 65 % by mass of softwood fibers relative to all of the second fibers and 7 to 35 % by mass of hardwood fibers relative to all of the second fibers. If the mix ratio of the second fibers is the same but the fiber diameters of the second fibers were set to be smaller than 10 µm, the total fiber length of the second fibers would increase. This would finely divide the space in the filter material and affect the aspects of low pressure loss and high dust holding amount in an undesirable manner. If the fiber diameters of the second fibers were set to be larger than 40 µm, the total fiber length of the second fibers would decrease. This would enlarge the -gaps in the filter material and affect the aspect of high dust filtration efficiency in an undesirable manner.

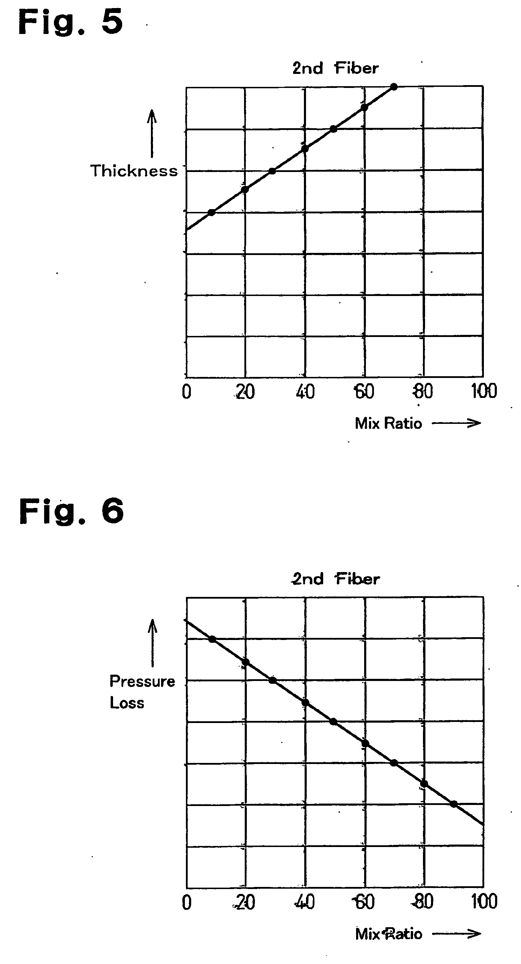

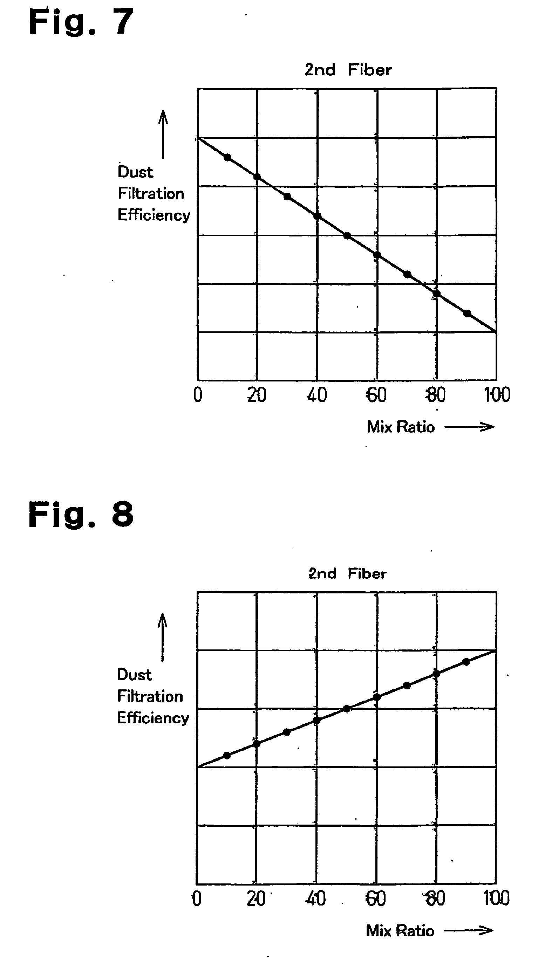

The mix ratio of the second fibers in the entire filter material was changed while keeping the mix ratios of the first and third fibers fixed. In this case, changes in the thickness, pressure loss, dust filtration efficiency, and the dust holding amount of the filter material were observed. The results are shown in Figs. 5 to 8. The second fibers differ from the first fibers in that the thickness, pressure loss, dust filtration efficiency, and dust holding amount of the filter material all changed proportionally to changes in the mix ratio of the second fibers. This is because the second fibers mainly contribute to determining the bulkiness of the filter material and does not have much influence on the dust filtration efficiency and dust holding amount of the filter material.

The third fibers are formed using thermoplastic fibers, such as polyester fibers, and have a fiber diameter in the range of 5 to 10 µm. The mix ratio of the third fibers is in the range of 10 to 30% by mass in the entire filter material. If the mix ratio of the third fibers were the same but the fiber diameters of the third fibers were set to be smaller than 5 µm, the total fiber length of the third fibers would increase. This would finely divide the space in the filter material and affect the aspects of low pressure loss and high dust holding amount in an undesirable manner. If the fiber diameters of the third fibers were to be set to be larger than 10 µm, the gaps in the filter material would be enlarged. This would affect the aspect of high dust filtration efficiency in an undesirable manner.

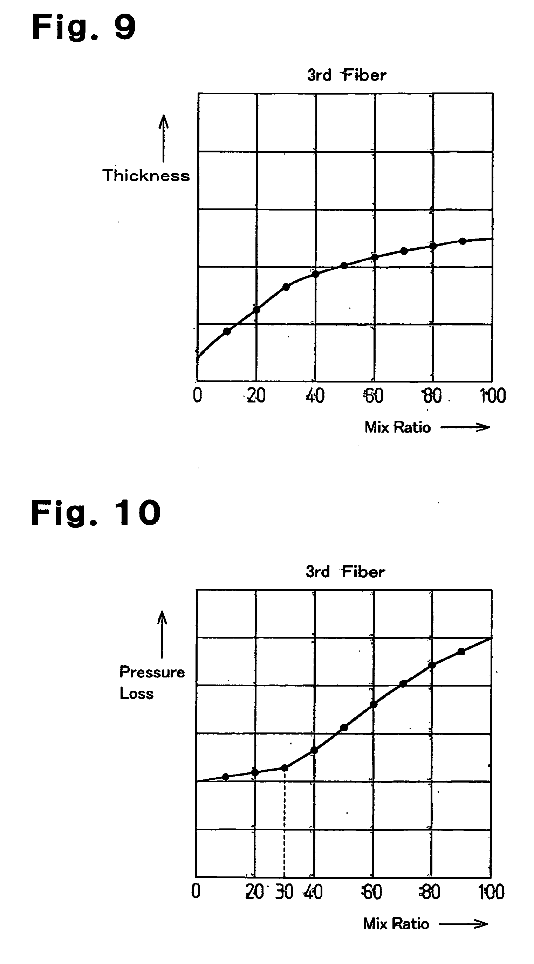

The mix ratio of the third fibers in the entire filter material was changed while keeping the mix ratios of the first and second fibers fixed. Changes in the thickness, pressure loss, dust filtration efficiency, and dust holding amount of the filter material were observed. The results are shown in Figs. 9 to 12. As shown in Fig. 9, the thickness of the filter material tends to increase as the mix ratio of the third fibers increases. However, when the mix ratio of the third fibers exceeds 30% by mass, the increase rate of the thickness decreases due to the weight of the third fibers. Further, as shown in Fig. 10, pressure loss increases as the mix ratio of the third fibers increases. This is because as the mix ratio of the third fibers increases, the thin third fibers increase the total fiber length of the third fibers. As a result, the resistance to air flow increases. In particular, the pressure loss of the filter material tends to increase drastically when the mix ratio of the resin fibers exceeds approximately 30% by mass.

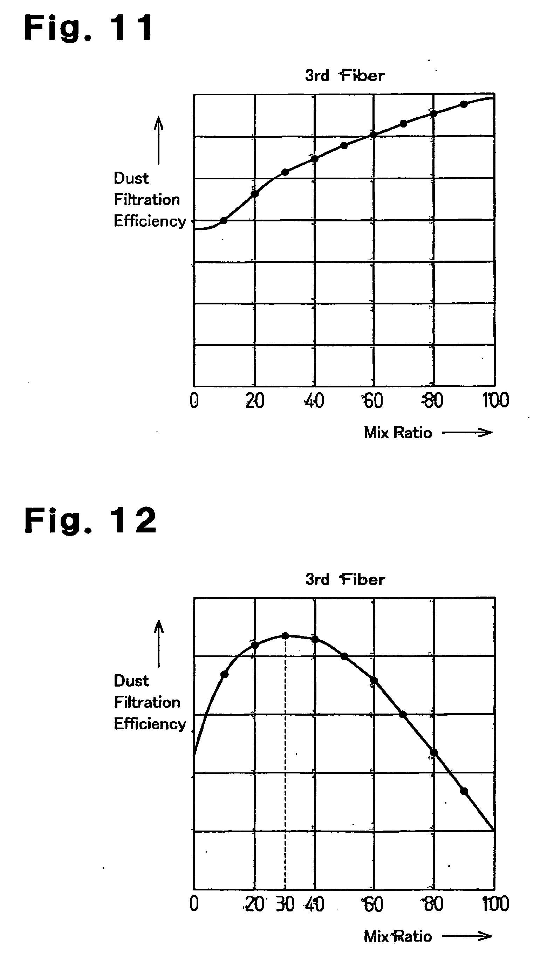

As shown in Fig. 11, the dust filtration efficiency also increase as the mix ratio of the third fibers increases. As shown in Fig. 12, the dust holding amount, which affects the product life, increases up until the mix ratio of the third fibers reaches approximately 30% by mass. However, the dust holding amount drastically decreases when the mix ratio of the third fibers exceeds approximately 30% by mass since the dust filtration efficiency increases and the filter material becomes easily clogged.

These results indicate that the third fibers particularity contribute to increasing the dust filtration efficiency and that it is preferable to set the mix ratio of the third fibers in the range of 10 to 30% by mass. If the mix ratio of the third fibers were to be set larger than 30% by mass, the aspects of low pressure loss and high dust holding amount would be affected in an undesirable manner. If the mix ratio of the third fibers were set to be lower than 10% by mass, the dust filtration efficiency would be insufficient.

Accordingly, it is preferable that the mix ratio of the first fibers de set in the range of 10 to 40% by mass, the mix ratio of the second fibers be set in the range of 40 to 80% by mass, and the mix ratio of the third fibers be set in the range of 10 to 40% by mass. This would result in the filter material having bulkiness and ensure low pressure loss. Further, the third fibers compensate for the lack of high dust filtration efficiency with the second fibers. Further, the first fibers have the functions of both the second and third fibers. As a result, the filter material is provided with the characteristics of low pressure loss, high dust filtration efficiency, and a high dust holding amount. When this filter material is used, for example, in an air cleaner for an engine, its low pressure loss feature lowers the intake air resistance and enables high efficiency operation of the engine. Further, the high dust filtration efficiency feature ensures a sufficient filtering effect, and the high dust holding amount feature prolongs the life of the filter material.

The filter material of the preferred embodiment has a single-layer structure fabricated by mixing three types of fibers. Thus, the filter material of the preferred embodiment has a structure that is more simple and easier to fabricate as compared with conventional filter materials that requires pore diameters to be adjusted or multiple layers to be laminated and integrated. Further, the entire filter material does not have excessive thickness. Thus, the filter material of the preferred embodiment would cause no problems when incorporated in a housing of an air cleaner.

### [Examples]

Examples of the present invention will now be described in detail.

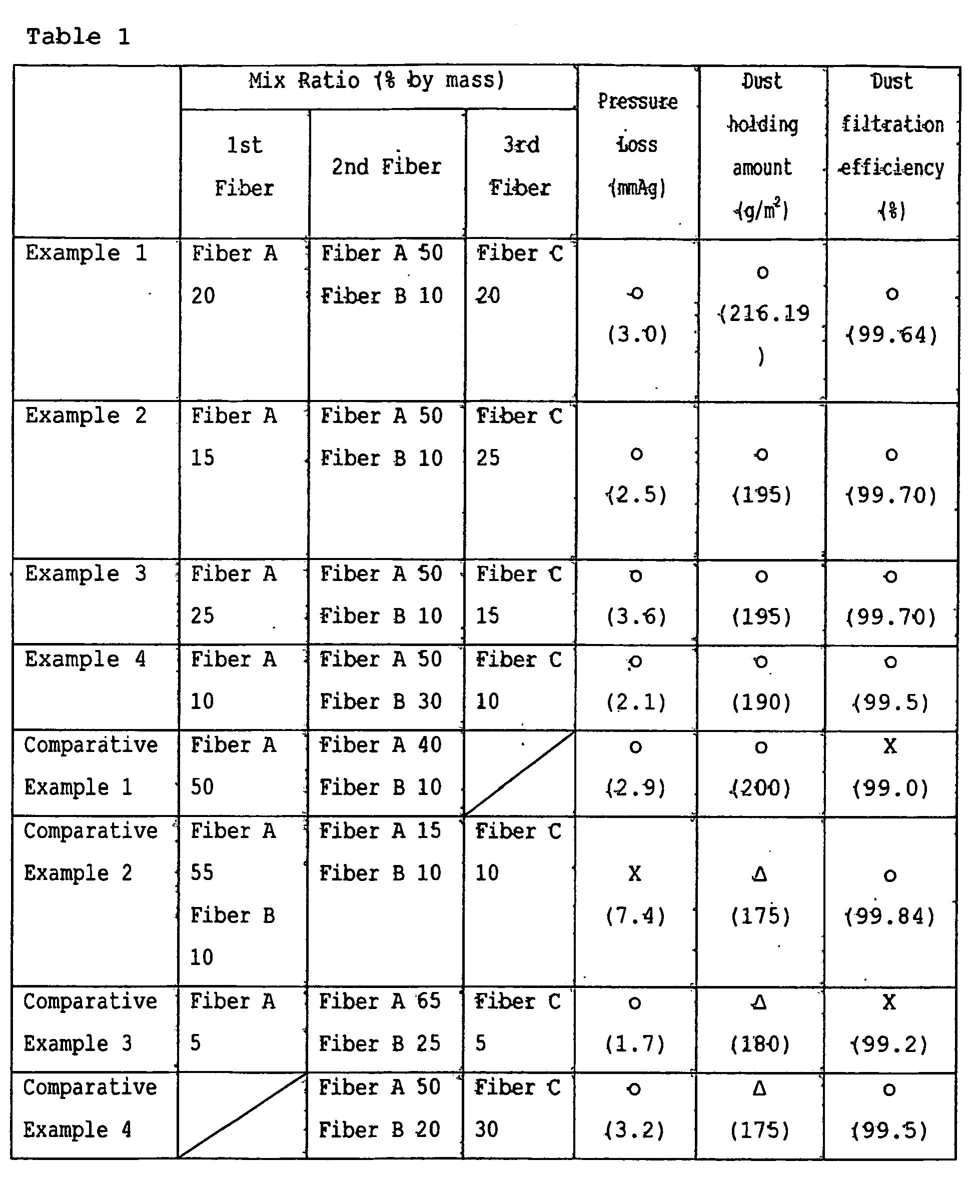

**Table 2**

| | Fiber Diameter (µm) | Fiber Length (mm) |
|---|---|---|
| Fiber A: Softwood Pulp | 30 to 40 | 2.1 to 2.2 |
| Fiber B: Hardwood Pulp | 10 to 20 | 1.4 |
| Fiber C: Polyester | 6 | 5 |

As shown in Tables 1 and 2, a filter material of example 1 was formed by mixing 20% by mass of softwood pulp fibers having a fiber diameter of 30 to 40 µm as the first fibers, 50% by mass of the softwood pulp fibers as the second fibers and 10% by mass of hardwood pulp fibers having a fiber diameter of 10 to 20 µm as the second fibers, that is, 60% by mass in total as the second fibers, and 20% by mass of polyester fibers having a fiber diameter of 6 µm as the third fibers.

A filter material of example 2 was formed by mixing 15 % by mass of the softwood pulp fibers as the first fibers, 50% by mass of the softwood pulp fibers and 10% by mass of the hardwood pulp fibers as the second fibers, that is, 60% by mass in total as the second fibers, and 25 % by mass of the polyester fibers as the third fibers.

A filter material of example 3 was formed by mixing 25 % by mass of the softwood pulp fibers as the first fibers, 50% by mass of the softwood pulp fibers and 10% by mass of the hardwood pulp fibers as the second fibers, that is, 60% by mass in total as the second fibers, and 15 % by mass of the polyester fibers as the third fibers.

A filter material of example 4 was formed -by mixing 10% by mass of the softwood pulp fibers as the first fibers, 50% by mass of the softwood pulp fibers and 30% by mass of the hardwood pulp fibers as the second fibers, that is, 80% by mass in total as the second fibers, and 10% by mass of the polyester fibers as the third fibers.

A filter material of comparative example 1 was formed by mixing 50% by mass of the softwood pulp fibers as the first fibers, and 40% by mass of the softwood pulp fibers and 10% by mass of the hardwood pulp fibers as the second fibers. The third fibers were not mixed.

A filter material of comparative example 2 was formed by mixing 55 % by mass of the softwood pulp fibers and 10% by mass of the hardwood pulp fibers as the first fibers, 15 % by mass of the softwood pulp fibers and 10% by mass of the hardwood pulp fibers as the second fibers, and 10% by mass of the polyester fibers as the third fibers.

A filter material of comparative example 3 was formed by mixing 5 % by mass of the softwood pulp fibers as the first fibers, 65 % by mass of the softwood pulp fibers and 25 % by mass of the hardwood pulp fibers as the second fibers, and 5 % by mass of the polyester fibers as the third fibers.

A filter material of comparative example 4 was formed by mixing 50% by mass of the softwood pulp fibers 20% by mass of the hardwood pulp fibers as the second fibers, and 30% by mass of the polyester fibers as the third fibers. The first fibers were not mixed.

The pressure loss, the dust holding amount, and the dust filtration efficiency of the filter materials of examples 1 to 4 and comparative examples 4 were measured and compared with one another. The results are shown in Table 1, in which symbol o represents a satisfactory result, symbol Δ represents a normal result, and symbol X represents a poor result. The results indicate that the filter materials of examples 1 to 4 formed based on the fiber mix ratios of the present invention exhibited high performance in every aspect of low pressure loss, high dust holding amount, and high dust filtration efficiency.

The results also show that the filter material of comparative example 1 has extremely low dust filtration efficiency because the third fibers were not included. The filter material of comparative example 2 has high pressure loss and a low dust holding amount because the mix ratio of the crimped fibers was small. Although the filter material of comparative example 3 has a low pressure loss because the mix ratio of the crimped fibers was large, the dust filtration efficiency is low because the mix ratio of the third fibers was small. Although the filter material of comparative example 4 has low pressure loss because the mix ratio of the crimped fibers is large, the dust holding amount is slightly lowered because the first fibers were not mixed.

It should be apparent to those skilled in the art that the present invention may be embodied in many other specific forms without departing from the spirit or scope of the invention. Particularly, it should be understood that the present invention may be embodied in the following forms.

Although the fiber diameters of the first to third fibers are set in accordance with a normal distribution of the fibers in the above embodiment, the fiber diameters may be set in accordance with the average fiber diameters of the fibers.

The softwood pulp fibers and the hardwood pulp fibers may both be used as the first fibers.

The second fibers may be only either one of the softwood pulp fibers and the hardwood pulp fibers.

A fiber material differing from the material used in the above embodiment may be used as the synthetic resin fibers made of thermoplastic polymers. For example, an acrylic material may be used.

The present examples and embodiments are to be considered as illustrative and not restrictive, and the invention is not to be limited to the details given herein, but may be modified within the scope and equivalence of the appended claims.

## Claims

1. A filter material being **characterized in that** the filter material is fabricated by mixing:
first fibers of natural fibers having a fiber diameter of 10 to 40 µm;
second fibers of crimped natural fibers having a fiber diameter of 10 to 40 µm; and
third fibers of fibers having a fiber diameter of 5 to 10 µm, the first to third fibers being mixed at a mix ratio of 10 to 30% by mass, 40 to 80% by mass, and 10 to 30% by mass, respectively.

2. The filter material according to claim 1, **characterized in that** the first fibers and second fibers are each formed by at least either one of softwood pulp fibers and hardwood pulp fibers.

3. The filter material according to claim 1 or 2, **characterized in that** the third fibers are formed by synthetic fibers of a thermoplastic polymer.

4. The filter material according to claim 1, **characterized in that** the second fibers include 93 to 65% by mass of softwood pulp fibers and 7 to 35% by mass of hardwood pulp fibers.

5. The filter material according to any one of claims 2 to 4, **characterized in that** the softwood pulp fibers have a fiber diameter of 30 to 40 µm, and the hardwood pulp fibers have a fiber diameter of 10 to 20 µm.

## Patentansprüche

1. Filtermaterial, **dadurch gekennzeichnet, dass** das Filtermaterial hergestellt wird durch Mischen von:
ersten Fasern aus natürlichen Fasern mit einem Faserdurchmesser von 10 bis 40 µm;
zweiten Fasern aus gekräuselten natürlichen Fasern mit einem Faserdurchmesser von 10 bis 40 µm; und
dritten Fasern aus Fasern mit einem Faserdurchmesser von 5 bis 10 µm, wobei die ersten bis dritten Fasern in einem Mischungsverhältnis von 10 bis 30 Massen-%, 40 bis 80 Massen-%, bzw. 10 bis 30 Massen-% gemischt werden.

2. Filtermaterial nach Anspruch 1, **dadurch gekennzeichnet, dass** die ersten Fasern und die zweiten Fasern jeweils durch wenigstens eines von Weichholz-Zellstofffasern und Hartholz-Zellstofffasern gebildet werden.

3. Filtermaterial nach Anspruch 1 oder 2, **dadurch gekennzeichnet, dass** die dritten Fasern durch synthetische Fasern eines thermoplastischen Polymers gebildet werden.

4. Filtermaterial nach Anspruch 1, **dadurch gekennzeichnet, dass** die zweiten Fasern 93 bis 65 Massen-% an Weichholz-Zellstofffasern und 7 bis 35 Massen-% an Hartholz-Zellstofffasern beinhalten.

5. Filtermaterial nach einem der Ansprüche 2 bis 4, **dadurch gekennzeichnet, dass** die Weichholz-Zellstofffasern einen Faserdurchmesser von 30 bis 40 µm besitzen, und die Hartholz-Zellstofffasern einen Faserdurchmesser von 10 bis 20 µm besitzen.

## Revendications

1. Matériau filtrant ***caractérisé en ce que*** le matériau filtrant est fabriqué en mélangeant :
des premières fibres de fibres naturelles ayant un diamètre de fibre de 10 à 40 µm ;
des deuxièmes fibres de fibres naturelles crêpées ayant un diamètre de fibre de 10 à 40 µm ; et
des troisièmes fibres de fibres ayant un diamètre de fibres de 5 à 10 µm, les premières à troisièmes fibres étant respectivement mélangées selon un rapport de mélange de 10 à 30 % en masse, de 40 à 80 % en masse, et de 10 à 30 % en masse.

2. Matériau filtrant selon la revendication 1, ***caractérisé en ce que*** les premières fibres et les deuxièmes fibres sont chacune formées par au moins l'une ou l'autre d'entre des fibres de pâte de bois résineux et des fibres de pâte de bois feuillus.

3. Matériau filtrant selon la revendication 1 ou 2, ***caractérisé en ce que*** les troisièmes fibres sont formées par des fibres synthétiques d'un polymère thermoplastique.

4. Matériau filtrant selon la revendication 1, ***caractérisé en ce que*** les deuxièmes fibres comprennent de 93 à 65 % en masse de fibres de pâte de bois résineux et de 7 à 35 % en masse de fibres de pâte de bois feuillus.

5. Matériau filtrant selon l'une quelconque des revendications 2 à 4, ***caractérisé en ce que*** les fibres de pâte de bois résineux ont un diamètre de filtre de 30 à 40 µm, et les fibres de pâte de bois feuillus ont un diamètre de fibre de 10 à 20 µm.
